# EUROPEAN PATENT APPLICATION

(11) **EP 1 415 784 A1**
(43) Date of publication of application: **06.05.2004**
(21) Application number: 02079574.6
(22) Date of filing: 31.10.2002
(51) Int. Cl.: B29C 47/10, B29C 47/08

(54) **Compounding process**

(71) Applicant: SABIC Polypropylenes B.V., 6135 KR Sittard (NL)
(72) Inventor: Meesen, Adriaan Willem, 6114 XG Susteren (NL); Van Den Hof, Richard Paul Alfred, 6121 XT Born (NL)
(74) Representative: Krijgsman, Willem

(57) **Abstract**

The invention relates to a compounding process for the continuous preparation of a polymer composition comprising at least a polymer and a particulate solid substance dispersed therein, comprising separate dosing of the polymer and the particulate solid substance to a melt-mixing apparatus and melt-mixing the polymer and the particulate solid substance in the melt-mixing apparatus, wherein the particulate solid substance is fed to the melt-mixing apparatus under reduced pressure, relative to atmospheric pressure, and the reduced pressure is attained during at least a part of the melt-mixing. The advantage is that the process does not require the use of densified particulate solid substance and allows the use of nondensified and/or (ultra) fine talc at higher throughput rates than the known split-feed compounding process.
The invention also relates to equipment suitable for carrying out the process and to a process for shaping a melt, wherein the melt results from a compounding process according to the invention.

## Description

The invention relates to a compounding process for the continuous preparation of a polymer composition comprising at least a polymer and a particulate solid substance dispersed therein, comprising separate dosing of the polymer and the particulate solid substance to a melt-mixing apparatus and melt-mixing the polymer and the particulate solid substance in the melt-mixing apparatus.

Such a process is known from an article of J.A. Radosta and E. Beecher in Antec 2000 / 239. In this article a process is described for the preparation of a polymer compound comprising polypropylene as the polymer and talc as the particulate solid substance. The melt-mixing apparatus is a twin-screw extruder configured with 11 barrels. The polymer and particulate solid substance are fed separately to the extruder: the polymer is fed to the first barrel, while the particulate solid substance is fed to barrel 5 by means of a side feeder (a so-called split-feed compounding process).

The problem with the known process is that when nondensified talc is used as the particulate solid substance, backup of talc in the side feeder occurs, resulting in a limitation of the throughput rate. This problem of backup, also known as hold-up or flooding, is according to the article of Radosta and Beecher solved by using densified talc, by which higher throughput rates can be attained. However, for this solution the talc has to be densified before being fed to the melt-mixing apparatus.

The criticality of the throughput rate in preparing polymer compositions is more and more increasing, given the need for large-volume cost-effective compositions, for compositions with a high content of particulate solid substance, and for the use of fine and ultra-fine size talc as highly effective, low-cost reinforcement agent for a large variety of thermoplastic compositions, also given the tendency to combine compounding processes with high speed shaping processes.

The aim of the invention is therefore to find a compounding process that does not require the use of densified talc and allows the use of nondensified and/or (ultra) fine talc at higher throughput rates than the known split-feed compounding process.

This aim is achieved with a process according to the invention, wherein the particulate solid substance is fed to the melt-mixing apparatus under a reduced pressure, being a pressure below atmospheric pressure, and wherein said reduced pressure is maintained during at least a part of the melt-mixing.

A compounding process comprising dosing of a solid material to a melt-mixing apparatus is also described in Polymer Extrusion, third revised Edition, by C. Rauwendaal, Hanser Publishers, ISBN 3-446-17960-7, 1994, pages 67-68. In the process described by Rauwendaal, a granular material with a low bulk density is fed through a feed hopper to an extruder having a die exit. Likewise, though this is not made explicit in this publication, the granular material is a polymer or the granular material comprises a polymer which is fed together with said granular material. The problem with such a process, according to Rauwendaal, is that these materials, in particular materials with low density, tend to entrap air, which will be carried by the polymer and eventually appear at the die exit. In most cases, this will cause surface imperfections of the extrudate and in some cases it causes small explosions when the air escapes from the die. One method to overcome this air entrapment problem, according to Rauwendaal, is to use a vacuum feed hopper. Another method to avoid air entrapment, also according to Rauwendaal, is to use a two-stage extruder screw with a vent port in the barrel to extract air and any volatiles that might be present in the polymer. This publication does neither read upon a compounding process with separate dosing of a polymer and a particulate solid substance, nor upon the problem of dosing limitations observed with non-densified particulate solid substances, nor upon a solution for that problem.

With reduced pressure is here and hereinafter understood a pressure which is below atmospheric pressure, which atmospheric pressure is usually present in the area in which the process for the continuous preparation of a polymer composition is carried out, and which atmospheric pressure normally is around 0.1 MPa. Preferably, the reduced pressure is below 80 kPa. The advantage is that the maximum attainable throughput of particulate solid substance is further increased. Furthermore, mixing of the particulate solid substance in the polymer is more effective, while venting, if still needed, can be reduced, and if venting is applied, less dusting of the particulate solid substance in the venting step occurs.

More preferably the reduced pressure is below 50 kPa, even more preferably below 20 kPa and most preferably below 10 kPa. The lower the reduced pressure, the less the fluidization of the particulate solid substance after dosing is and the more pronounced the above-mentioned advantages are. With a reduced pressure below 10 kPa, dusting of even very fine low-density particulate solid substance can almost completely to completely be prevented.

With "the reduced pressure is maintained during at least a part of the melt-mixing" is meant here and hereafter that the reduced pressure is applied and maintained in a space in the melt-mixing area, in which space in the melt-mixing apparatus the particulate solid substance is dosed; the reduced pressure is only relieved further downstream in the process in a position, where already at least some melt-mixing of the polymer and the particulate solid substance has taken place, and which downstream position is not in open contact with the dosing space.

With the term "particulate solid substance" is understood any additive having a particulate form, with a small particle size, that can be used in preparing polymer compositions comprising a polymer and an additive. Such additives can be in the form of particles with different shapes and geometries, like spheres, cubes, platelets, squares and fibers, and all kinds of irregular modifications of these shapes and geometries. In general, these particles are characterized by different (average) dimensions for length, width and thickness. The particles may show large variations in these dimensions, in particle size (i.e. the largest dimension of length, width or thickness of a particle), in aspect ratio (i.e. ratio of length over thickness) and in density.

Typically, the particulate solid substances that can be used in the process according to the invention have a weight average particle size of at most 1 mm. Preferably, the particulate solid substance has a weight average particle size of at most 0.1 mm, more preferably 0.01 mm and most preferably at most 1 µm. The smaller the weight average particle size of the particulate solid substance is, the higher is the increase in maximum dosing rate that can be obtained with the nondensified particulate solid substance in the process of the invention.

Particulate solid substances with a small particle size generally have a low ratio between bulk density and specific density. This ratio between bulk density and specific density is further denoted as density ratio. With the term bulk density, also known as apparent density, is here and hereafter understood the weight per unit volume of a material, including voids and air inherent in the material as tested. A method for determining the bulk density of a particulate solid substance is measured, for example, in ASTM D 1895-96 Test Method A.

Specific densities of particulate solid substances may be as high as 5000 kg/m³ or even higher, whereas bulk densities of particulate solid substances may be as low as 100 kg/m³ or even lower. As an example, talc has a specific density of 2700 kg/m³, whereas the bulk density of talc with a small particle size may be as low as 200 kg/m³, resulting in a density ratio of 0.074. The effect of the process according to the invention is enhanced with particulate solid substances having lower density ratio. I.e. whereas the effect of increased maximum throughput is already observable with particulate solid substances with a high density ratio, e.g. a density ratio of 0.2, this effect is enhanced when the density ratio is at most 0.1, and is even further enhanced with a density ratio of at most 0.075 and even more with a density ratio of at most 0.05.

Particulate solid substances that can be used in the process according to the invention can be any type of particulate material that is melt-mixable with a polymer in a melt-mixing process to prepare a polymer composition comprising such particulate materials. In particular, particulate solid substances that give dusting problems, and due to which dusting problems dosing problems can arise, are preferred.

Suitable particulate solid substances are, for example, mineral fillers, nanofillers, pigments, processing additives and stabilizers, impact modifiers, flame retardants, reinforcement fibers (like chopped carbon fibers and chopped glass fibres), and polymeric additives in particulate form (like acrylonitril-butadiene-styrene copolymers (ABS) in powder-form mixed into polycarbonate).

Preferably, the particulate solid substance is a mineral filler. Mineral fillers with a relative low aspect ratio are generally used as extenders and/or stiffness enhancers (increased strength and/or toughness), whereas mineral fillers with a higher aspect ratio are preferably used for reinforcement. Mineral fillers are used in polymer compositions typically in relative high amounts. With the process according to the invention, polymer compositions with a higher particulate solid substance load can be prepared. Such compositions can also advantageously be used as a masterbatch or a filler concentrate.

Melt-mixing of mineral particulate solid substances into a polymer generally requires high shearing forces and high input of energy, which can result in thermal degradation of the polymer. Occurrence of thermal degradation will in particular be the case with polymers having a high melting temperature, which require high processing temperatures. Use of masterbatches with high particulate solid substance content in combination with unfilled polymer to give the desired polymer composition, results in a reduction of the amount of polymer exposed to the high processing temperature, and overall in less degradation of polymer. This advantage is further enhanced with other variations of the process according to the invention, which allow a further increase in particulate solid substance load.

Suitable mineral fillers are, for example, wollastonite, kaolin, calcium carbonate, talc, mica, quartz, barium sulphate, and silica. Preferably, the particulate solid substance is talc, more preferably, micronized talc.

The polymers that can be used in the process according to the invention can be any thermoplastic or thermoset polymer which is normally used in compounding processes comprising a melt-mixing step for preparing polymer compositions comprising particulate solid substances process.

Suitable thermoplastic polymers are, for example, polyolefins (like, polyethylene (PE), polypropylene (PP), and any copolymers thereof), polyvinylchloride (PVC), polycondensation polymers (like polyesters, polyethers, polyamides (like polyamide 6 (PA6)), polyurethanes, polycarbonates, and any copolymers thereof), and blends of any of these polyolefins and / or polycondensation polymers.

Suitable thermoset polymers are, for example, polyesters (like unsaturated polyesters used in bulk moulding compounds, and saturated polyesters used in powder coatings), curable epoxy resins and polyurethane resins.

Preferably, the polymer is PE, PP, PVC or PA6. These polymers are often used in products produced at large scale, which products can advantageously be produced in high throughput processes.

In the process according to the invention the polymer and the particulate solid substance are dosed separately to a melt-mixing apparatus after which the polymer and the particulate solid substance are melt-mixed in the melt-mixing apparatus.

In a preferred embodiment of the process first the polymer is dosed and melted, resulting in a polymer melt, whereafter the particulate solid substance is dosed to the polymer melt. This has the advantage that less abrasion of the melt-mixing apparatus occurs and less energy input is required.

The melt-mixing apparatus that can be used in the process according to the invention can be any melt-mixing apparatus suitable for use in a continuous melt-mixing process, known to the man skilled in the art. Suitable melt-mixing apparatus, are, for example, continuous mixers and extruders, as described for example in Plastics Compounding: Equipment and Processing by D.B. Todd, Hanser publishers, ISBN 1-56990-236-4, Munich, 1998. Suitable continuous mixers are, for example, Farrell mixers and examples of suitable extruders include single-screw extruders (like a Bush kneader), and double-screw or twin-screw extruders (such as ZSK extruders), and all modifications thereof.

Preferably the melt-mixing apparatus is an extruder. The advantage of an extruder is that an extruder can easier be modified with seals necessary for applying the reduced pressure.

In a more preferred embodiment of the invention, wherein the melt-mixing apparatus is an extruder, the polymer is dosed into a first dosing section of the extruder and melted, whereafter the particulate solid substance is dosed to the polymer melt into a second dosing section of the extruder, which second dosing section is positioned in between two sections sealed with polymer melt. The advantage of this embodiment is that the particulate solid substance can be added without the need of a mechanical seal around a screw shaft at the rear end of the extruder or as a front-end seal in the extruder, which eliminates the risk of leakage of such seals. A further advantage is that the dosing sections in the extruder, to which the particulate solid substance is dosed, require less free volume and the extruder screw doesn't have to be as deeply cut or as long as with an extruder in a process as per the prior art. The use of an extruder in the process with a reduced dosing pressure according to the invention also allows preparing compositions with higher loading of particulate solid substance, without the need to reduce the throughput and/or to (substantially) increase the length of the extruder, which would unfavourably increase the costs and/or thermal load of the extruder content. The particulate solid substance loading can be higher, the lower the reduced pressure is. A further advantage is that the screw speed can be increased without raising the temperature of the melt, which results in a further increase of the extruder-throughput and even better utilization of the extruder.

In an even more preferred embodiment, the extruder is a twin-screw extruder. The advantage of a twin screw-extruder is its capability of establishing a full melt in a short time with high shear rates. A further advantage is that the mixing action in a twin-screw extruder is much more intense, which results in a more homogeneous compound. Also mixing is more effective, which results in a fully mixed melt with high particulate solid substance loading in a short shear area.

For the purpose of dosing a particulate solid substance under reduced pressure to a melt-mixing apparatus, there must also be a reduced pressure in the section of the melt-mixing apparatus whereto the particulate solid substance is dosed, which pressure must be about as low as the pressure in the dosing apparatus. Preferably the pressure in the melt-mixing apparatus and the pressure in the dosing apparatus are equal. The advantage is that there is no drag of air that disturbs proper dosing of the particulate solid substance.

In another preferred embodiment, the pressure in the melt-mixing apparatus is slightly lower than the pressure in the dosing apparatus, such that there is a small drag of air from the dosing apparatus to the melt-mixing apparatus. The advantage is that dosing of the particulate solid substance to the melt-mixing apparatus is supported by the drag of air. The drag of air must be low enough to prevent extensive fluidization of the particulate solid substance. Preferably the drag is so low that fluidization by the airflow is minimal, more preferably, there is no drag at all.

For realization of a reduced pressure in the dosing apparatus for the particulate solid substance, the dosing apparatus is connected to a first vacuum pump. For realization of a reduced pressure in the melt-mixing apparatus, the melt-mixing apparatus is connected to a second vacuum pump (or directly to the dosing unit). The first vacuum pump and the second vacuum pump to which the dosing apparatus respectively the melt-mixing apparatus are connected may as well be combined into one vacuum pump to which both the dosing apparatus and the melt-mixing apparatus are connected.

The dosing apparatus and the melt-mixing apparatus may be connected to different vacuum pumps. This has the advantage that the dosing apparatus may be shut of from the melt-mixing apparatus to release the reduced pressure and being refilled with particulate solid substance, without releasing the reduced pressure in the melt-mixing apparatus and running the risk of contamination of the dosing apparatus with the contents of the melt-mixing apparatus as soon as the reduced pressure in the dosing apparatus is reinstalled.

Preferable, the dosing apparatus and the melt-mixing apparatus are connected to the same vacuum pump. This has the advantage that it is easier to have less variation in the difference between the pressure in the melt-mixing apparatus and the pressure in the dosing apparatus or to keep said difference fairly constant, or even to have nearly equal pressures.

In case the melt-mixing apparatus is connected to a vacuum pump and the melt-mixing apparatus is an extruder, the vacuum pump may be connected upstream or down stream relative to the dosing apparatus. The vacuum pump is advantageously connected upstream relative to the dosing apparatus, since this results in a counter flow situation of air versus meltflow and reduces the risk of escaping of particulate solid substance out of the melt-mixing apparatus.

Downstream connection is advantageously as well, since this can result in pumping off of volatile components and may avoid a separate venting step for elimination of said components. The process may comprise one or more separate venting steps down stream the melting zone. The separate venting step or venting steps may optionally be vacuum venting steps. Preferably, the process does not comprise a separate venting step, but comprises a combination of the venting step with the connection of the vacuum pump to the extruder. This has the further advantage that in the extruder a longer mixing section can be applied allowing mixing in of more particulate solid substance at the same throughput rate, or that particulate solid substances can be used that are harder to wet and disperse, such as very fine particulate solid substances, like nanoparticulate solid substances that tend to agglomerate more easily, and/or that even higher throughput rates can be applied, or that the same process can be run on a much shorter extruder.

Vertical dosing as well as horizontal dosing, also known as side feed dosing, and variations thereof may be used for dosing of the particulate solid substance under reduced pressure. For dosing the particulate solid substance under reduced pressure any apparatus suited for that purpose can be used. Such a dosing apparatus may comprise a feeding unit or a metering unit or both. A suitable feeding unit is, for example, a vacuum feed hopper, and likewise a double feed hopper vacuum system, a crammer feeder, a vibrating path, or a positive feeding unit (like a vertical feed-screw, a horizontal feed screw, or more particular a twin-screw side feeder). Preferably, the feeding unit is a positive feeding unit. The advantage is that contamination of the feeding unit by volatile contaminants escaping from the hot dosing section of the melt-mixing apparatus is reduced if not suppressed at all.

Preferably, the dosing apparatus comprises a metering unit. The advantage of a metering unit is that dosing of the particulate solid substance to the melt-mixing apparatus is more reliable and the balance in polymer to particulate solid substance ratio can be kept more constant over time. A suitable metering unit is a loss-of-weight feeding unit, also known as gravimetric metering system. Such a unit is typically equipped with a scale, which measures constantly and almost instantly the amount of particulate solid substance dosed over time. The advantage of a loss-of-weight feeding unit as dosing unit is that even more accurate dosing of the particulate solid substance is allowed.

More preferably, the loss-of-weight feeder is combined with a side feeder.

The invention also relates to equipment suitable for carrying out the process according to the invention. Preferably, this equipment comprises a melt-mixing apparatus and at least two dosing apparatus connected to the melt-mixing apparatus, one of the at least two dosing apparatus being suitable for dosing a polymer to said melt-mixing apparatus, and another one of the at least two dosing apparatus being suitable for dosing a particulate solid substance under reduced pressure to said melt-mixing apparatus. The melt-mixing apparatus, as well as and the dosing apparatus, may be any of the embodiments mentioned above.

The process according to the invention may advantageously be used in combination with a process for shaping a polymer melt comprising a polymer and a particulate solid substance. The advantage is that the shaping process can be carried out at a higher throughput rate than the shaping process combined with a compounding process per the state of the art. How the melt is shaped at the end of the compounding process is dependent on the specific application. Suitable shaping processes, that may be combined with the process according to the invention, include, for example, production of strands by extrusion of the melt through a dye with holes (optionally followed by cooling and pelletizing by chopping the strands to form granules), fiber spinning, injection moulding, compression moulding, flat film production, direct extrusion of cables and tubes, and pultrusion. In a preferred embodiment of the invention, the melt-mixing unit is equipped with a shaping unit suitable for shaping the polymer melt. Pelletizing is a preferred shaping process to obtain a free flowing material suitable for further processing in other shaping processes. Shaping units, that can be used in the process according to the invention, can by any suitable shaping unit, known to the skilled man in the art. These units include, for example, die-face cutting units and strand pelletising units.

## Claims

1. Compounding process for the continuous preparation of a polymer composition comprising at least a polymer and a particulate solid substance dispersed therein, comprising separate dosing of the polymer and the particulate solid substance to a melt-mixing apparatus and melt-mixing the polymer and the particulate solid substance in the melt-mixing apparatus, **characterized in that** the particulate solid substance is fed to the melt-mixing apparatus under reduced pressure, relative to atmospheric pressure, and the reduced pressure is attained during at least a part of the melt-mixing.

2. Process according to claim 1, wherein the reduced pressure is at most 80 kPa.

3. Process according to any of claims 1-2, wherein the particulate solid substance has a weight average particle size of at most 1 mm.

4. Process according to any of claims 1-3, wherein the particulate solid substance has a ratio between bulk density and specific density of at most 0.2.

5. Process according to any of claims 1-4, wherein the particulate solid substance is a mineral filler.

6. Process according to any of claims 1-5, wherein the polymer is chosen from the group consisting of PE, PP, PVC, and PA6.

7. Process according to any of claims 1-6, wherein first the polymer is dosed and melted, resulting in a polymer melt, whereafter the particulate solid substance is dosed to the polymer melt.

8. Process according to any of claims 1-7, wherein the melt-mixing apparatus is an extruder.

9. Process according to claim 8, wherein the polymer is dosed into a first dosing section of the extruder and melted, whereafter the particulate solid substance is dosed to the polymer melt into a second dosing section of the extruder, which second dosing section is positioned in between two barrel sections which are sealed with polymer melt.

10. Process according to any of claims 1-9, wherein the particulate solid substance is dosed by means a loss-of-weight feeder.

11. Equipment suitable for carrying out the process according to any of claims 1-10.

12. Process for shaping a melt, wherein the melt results from a compounding process according to any of claims 1-10.
